# EUROPEAN PATENT SPECIFICATION

(11) **EP 1 702 811 B1**
(45) Date of publication and mention of the grant of the patent: **20.05.2009**
(21) Application number: 06110758.7
(22) Date of filing: 07.03.2006
(51) Int. Cl.: B60R 21/01, B60R 21/26, B60R 21/20, B60R 21/16

(54) **AIRBAG ASSEMBLY AND MODULATED AIRBAG INFLATION PROCESS**
AIRBAGANORDNUNG UND MODULIERTEN AIRBAGAUFBLASVERFAHREN
ENSEMBLE COUSSIN GONFLABLE DE PROTECTION ET PROCÉDÉ DE GONFLAGE D'UN COUSSIN GONFLABLE À MODULATION

(30) Priority: 08.03.2005 US 76264
(43) Date of publication of application: 20.09.2006
(73) Proprietor: Island Pyrochemical Industries Corp., NY 11501-2134 (US)
(72) Inventor: Parizat, Amnon, Old Westbury, New York 11568 (US); Cannetti, Robert, Dix Hills, New York 11746 (US); Seiler, Volker, 06766 Wolfen (DE)
(74) Representative: von Kirschbaum, Alexander

(56) References cited:
- DE-A1- 10 304 142
- US-A- 5 785 347
- US-A- 5 871 231
- US-A1- 2003 137 133
- US-A1- 2004 247 228

## Description

This invention relates to an airbag assembly and to a modulated airbag inflation process. More particularly, this invention relates to an air bag assembly for installation in a vehicle and to an electronically controlled modulated airbag inflation process.. Still more particularly, this invention relates to an electronically programmable airbag assembly and electronically controlled modulated inflation process to protect the occupants of a vehicle during a crash..

As is known, various types of airbag assemblies have been provided for use in vehicles in order to protect occupants during a crash situation. These airbags have been deployed in the steering wheels and dashboards of a vehicle for frontal crashes and in the sides of a vehicle for side crashes

Basically, an airbag is deployed when a crash situation has been sensed by one or more sensors strategically placed in the vehicle. In response to a sensed crash situation, an inflation device is actuated in order to expel an inflation gas into the airbag so that the airbag expands and deploys in a manner intended to cushion an occupant of the vehicle against the impact of the crash..

ln some cases, the inflation devices for expelling gas into an airbag have relied upon a liquid propellant that is expelled into a combustion chamber via a piston that is controlled by an electromagnet. As described in US patent 6,036,226, since the rate of the stroke of the piston governs the liquid propellant rate combustion rate and, in turn, airbag inflation rate, the magnitude of the magnetic field of the electromagnet can be utilized to control the airbag inflation rate on a real time basis. To this end, if no current is applied to the electromagnet, the airbag inflation rate is at a maximum rate and when a high magnetic filed is produced, a gentle airbag deployment can be obtained. Further, a sensor suite may be provided including a crash severity sensor, a rear facing infant seat sensor, an occupant weight sensor, a dashboard proximity sensor and a seat belt sensor so that a central processing unit can process the signals to modulate the airbag inflation rate during deployment according to a particular scenario of collision and occupant parameters. However, the details of such a system are not disclosed.

DE 103 04 142 describes an apparatus and process for inflating an airbag whereby the inflator is controlled in independence of crash parameters. The amount of gas which is supply to the airbag is adapted with regard to the crash parameters.

US 2003/0137133 describes an airbag system which is equipped with an inflator and a diffuser such that the gas spouted from the inflator is temporarily stored in the space between the inflator and the diffuser. The diffuser has a number of holes ore openings through which the gas is expelled.

Typically, state of the art airbags inflate at rates which do not take into account the different weight, size and the position of an occupant in a crash as well as the severity of the crash (crash severity) and the expected time of impact between the bag and the occupant.

For example, if a passenger in a front seat of a vehicle is out of a properly seated position, for example leaning over to adjust the dials of a radio or CD player when a crash occurs, the deployment of the airbag may itself cause injury to the passenger if the rate of inflation is at a maximum and the occupant position is too close to the deploying airbag (occupant is out of position).

The function of an airbag is to provide a damping action (or a "cushion") for the occupant body (as opposed to impacting and/or deflecting the occupant) in order to reduce the speed and momentum at which the occupant body moves forward in a frontal crash and might hit the steering wheel, dashboard or windshield that might cause injury to the occupant. Ideally, the airbag should have enough restraint capacity left in the bag after restraining the body's forward movement, to restrain the occupant body from hitting the steering wheel, dashboard or windshield.

The damping function can be achieved if the contact between the occupant and the bag is at the time when the bag is already deployed and filled with gas (the airbag is "in position"). The bag energy then will absorb the occupant impact with the bag and provide damping or a "soft" cushion for the occupant. With a continuously added flow of gas into the bag, the airbag will prevent the occupant body from going (punching) through the bag and hitting the steering wheel, dashboard and/or windshield.

Should the occupant come into contact with the bag too early while the bag is still in the process of being inflated, the inflating airbag would Impact and deflect the occupant in the manner of a mass spring system in the opposite direction back to the seat and may cause the occupant head and chest decelerations and deflections resulting in a whiplash and/or a deflection injury as an example. Alternatively, if the occupant would come into contact with the bag too late, i.e. after the bag has already been filled and is now in the process of deflating, the bag will not have enough restraint capacity to provide damping to the occupant, especially in cases of high weight occupants, and the occupant body will impact the bag and go through the bag and hit the steering wheel, dashboard and/or the windshield thereby causing an impact injury to the occupant

The severity of the crash and the weight/size of the occupant would affect the timing of when the occupant would meet with the bag.. Generally, crash tests that are conducted to analyze the restraint system capacity of a vehicle and injury risks for vehicle occupants are directed to different size/weight classifications of the occupants to represent the statistical distribution of size/weight within the adult population. This is done with 5%, 50% and 95% dummies wherein the 50% represents the average weight/size of the population. For example, the 50% dummy weighs 75 kilograms and represents a 50^{th} percentile of the adult population. Thus, in a low speed/low severity accident with a lightweight occupant (5 percentile), the occupant would meet the bag at a later time than in the case of a high speed/high severity accident.. Hence, for different accident severities, the bag would have to be "in position" and full at different times and would need to contain at the time of impact between the airbag and the occupant, different levels of energy to optimally absorb and dampen the different occupant weights. Also, the energy in the bag would have to be at a level that would not deflect the occupant away from the bag, but still have enough energy to absorb the occupant, provide the damping force to mitigate injury and be strong enough to prevent the occupant from hitting the steering wheel, dashboard and/or windshield

As is known, the hot gasses from an inflator are generated at temperatures of about 1000° Centigrade and are typically delivered directly into the airbag. As a result, the airbag must be made of a material that will resist this high heat without being damaged or burned though.

The airbag of this invention is made to have a low permeability and is made of nylon 6/6 fabric with an internal silicone coating The coating allows the fabric to have approximately zero permeability. The coating also acts as a heat insulator, allows the gas inside to stay hot longer and also protects the occupant from becoming burned.. Alternatively, an uncoated fabric with a low permeability can be used.

Accordingly, it is the object of the invention to provide an airbag assembly that can be electronically programmed to take into account the weight, size and position of an occupant during a crash as well as the severity of the crash and adjust its energy output and the timing of contact and/or impact between the occupant and the airbag accordingly.

It is another object of the invention to provide an electronically programmable inflation of an airbag assembly with an efficient airbag energy management and control system to effectively expel the gas from an inflatable device into an inflatable airbag and to control the deployment, response time and the position of the airbag at the required time after a crash is detected and retain the required airbag energy and the restraint capacity that is required for the different size and position of an occupant and the severity of the crash during the crash..

It is another object of the invention to program the inflation of an airbag so that an occupant contacts the airbag at a point in time at which the airbag is able to cushion the occupant and while gas is still being fed into the airbag to prevent the occupant from punching through the airbag..

It is another object of the invention to reduce the heat of a gas filling an airbag..

Typically, a vehicle crash has a duration of about 150 milliseconds from the time of impact during which time an airbag restraint system is operational. During the first 0-30 milliseconds of a crash, the safety restraint system detects and classifies the crash. Thereafter, an inflation of the airbags, depending on the volume of the airbags, occurs with the following duration :
Driver side: approximately 30 msec
Passenger side: approximately 40 msec.

Generally speaking, depending on the crash severity, at about 150 msec of the time of crash, the airbag restraint system is used and spent.

Briefly, the invention provides an airbag assembly that comprises an inflatable airbag having at least one vent opening of predetermined size for expelling gas therefrom, an inflator for expelling gas into the bag and inflating the bag at selected mass flow rates at the time of a crash, and an airbag module housing that connects the airbag to the inflator in a way to contain and diffuse the gas into the airbag while not allowing the expelled gas to leak outside the housing and the airbag assembly..

The airbag assembly cooperates with sensors located in a vehicle for sensing the weight, size and position of an occupant in the vehicle and the crash severity and for emitting corresponding signals at the time of and during a crash. The sensors are connected to an airbag electronic control unit (ECU).

The electronic control unit (ECU) receives and processes the signals with an algorithm to make a fire/no fire of the airbag decision. In the case of a fire decision, the ECU emits a signal directly to the inflator ignition unit to start the inflation process, At the same time and in parallel, the electronic control unit is programmed to select a characteristic signal from a group of pre-programmed characteristic signals that are representative of the crash situation, for example, the pre-programmed characteristic signals are representative of at least one of an occupant weight class and a vehicle crash severity. In the preferred embodiment, the pre-programmed characteristic signals are representative of an occupant weight class as well as a vehicle crash severity. Thus, for these parameters, there may be for example 12 characteristic signals, that is to say, 4 characteristic signals for each of three weight classes..

The ECU may also receive signals from sensors that sense other parameters, such as a sensor for child seat detection (transponder), and a sensor for detecting the occupant position before and during the crash.

Each characteristic signal that is programmed into the electronic control unit is developed from standardized tests.. For example, at a vehicle speed of 20 kilometers per hour (kph) against a rigid wall, the expected time of impact of an occupant with an airbag is 60 ms.. Thus, the characteristic curve is programmed for a given speed and weight class to provide a "hard" or "soft" bag at the time of impact.

The invention also provides an inflator control unit that is connected to and between the airbag electronic control unit and the inflator for receiving the selected characteristic signal from the ECU and for continuously controlling the flow of gas from the inflator in dependence on the characteristic signal whereby the airbag is inflated to an extent sufficient to initially cushion the occupant (a soft bag) and to prevent the occupant from punching through the airbag.

The inflator control unit thus controls the burn rate of the propellant of the inflator and the amount of hot gas over time that is expelled from the inflator into the airbag. An inflator programmed in accordance with the invention provided an airbag that reduced the occupant body deceleration by 30% when compared with state-of-the-art systems, i.e. a soft bag..

In case of a fire decision for the airbags, the ECU processes the signals from the sensors and chooses a characteristic signal, i.e., a current profile that represents a specific inflation mass flow rate.. The ECU communicates the chosen signal to the ICU to deliver the signal to the inflator which delivers a specified gas mass flow rate to the airbag. This process is a continuous process that starts after a decision to fire the inflator is made by the ECU and lasts through the duration of the crash.

The ECU operates such as to emit a first signal to the inflator in response to the sensed information in order to effect inflation of the airbag, to emit a second signal at the same time in parallel to the ICU to control the gas mass flow rate of the inflator in response to sensed information to effect inflation of the airbag at a specific mass flow rate and to thereafter emit a third signal to the ICU to control the gas mass flow rate of the inflator at a different mass flow rate than the second mass flow rate, in response to newly sensed information during the crash.

In accordance with the invention, the inflation device is constructed, for example, as described in pending US Application Serial No. 10/243,206 filed September 13, 2002..

The inflation of the airbag is electronically programmable with an efficient airbag energy management and control system that effectively expels the gas from the inflation device into the inflatable airbag and that controls the deployment and the position of the airbag at the required time after a crash is detected i.e. approximately between 20 and 65 milliseconds from time of the crash.

When using an airbag system, such as described in co-pending patent application Serial Number 10/243,206, filed September 13, 2002, the inflation time of a driver side airbag can be extended to approximately 50/55 msec and for a passenger side airbag to 65/80 msec depending on airbag volumes.

To have a system that can effectively deliver restraint protection at the required time interval, the system must be accurate and have a fast response time. To achieve these objectives, the system of the invention has the following characteristics

The system utilizes a special housing/diffuser to enhance the inflator gas expelling and diffusing performance into the bag. A seal between the housing and the inflator allows the gas to flow and diffuse in a controlled manner that enhances the response time and the placement of the bag. A seal between the inflator housing and the bag ensures that no gas leakage takes place between the inflator housing and the bag to conserve and control the gas energy.

A low permeability bag with a silicon coating ensures that the expelled gas does not leak through the bag fiber, enhances the response time of the airbag inflation and provides for heat insulation to prevent burning of the airbag and the occupant. The system uses airbag vent holes through which the expelled gas can be vented out of the bag in such a way that optimizes, in a timely manner, the relationship between the gas mass in-flow rate and the airbag vent hole gas out-flow rate

To emit electronic signals and electric current from the ICU to the inflator at the required time intervals, the ICU uses an electronic circuit arrangement as per Patent No. 6,564,717 while the inflator uses an improved electro-magnetic device design that enhances the speed in which the magnetic field is created and enhances the burn rate control of the propellant of the inflator (in accordance with co-pending patent application Serial Number 10/243,206, filed September 13, 2002).

These and other objects and advantages of the invention will become more apparent from the following detailed description taken in conjunction with the accompanying drawings wherein..

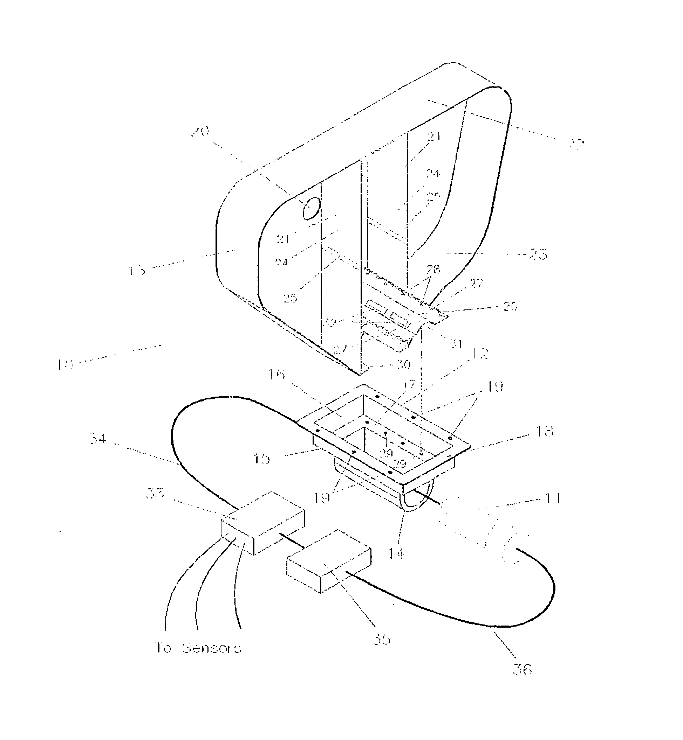

The drawing illustrates an exploded view of an airbag assembly constructed in accordance with the invention.

Referring to the drawing, the airbag assembly 10 is constructed for use in a vehicle to protect a driver or an occupant In this respect, the airbag assembly 10 is constructed of a suitable packaging size so as to be incorporated into a steering wheel or into a dashboard while also having a bag volume, size and shape to provide optimal protection for the occupant.. The airbag assembly 10 may also be constructed to be deployed in other areas of a vehicle

The airbag assembly 10 includes a variable output inflator 11, such as described in pending United States patent application Serial No. 10/243,206 filed September 13, 2002. The inflator 11 is shaped in a cylindrical manner and is constructed to expel a flow of hot gas at continuously selected mass flow rates..

The airbag assembly 10 also includes a housing 12 that receives the inflator 11 and that houses an airbag 13 in a manner so that a flow of hot gas from the inflator 11 is expelled into the inflator housing 12 and then directed into the airbag 13. As illustrated, the housing 12 has a part-cylindrical section 14 that slidingly receives the inflator 11 in a sealed relation and a rectangular section 15 that defines a rectangular recess 16 to receive the airbag 13. The housing 12 is constructed so that hot gas from the inflator 12 is directed directly into the airbag 13 without leaking from the housing 12 to the surrounding environment.

As illustrated, the rectangular section 15 of the housing 12 has a circumferential ledge 17 at the bottom of the recess 16 that surrounds an opening 18 to the part-cylindrical section 13. ln addition, the rectangular section 15 has a circumferential flange 18 at the top of the recess 16 that is provided with a plurality of openings 19 on two opposite sides through which mounting screws or bolts or the like (not shown) may be passed to mount the housing 12 in place in a vehicle.

The airbag 13 is constructed from a low permeability fabric in order to prevent leakage of a gas therethrough and is of a material that may be folded in a conventional manner in order to fit within the recess 15 of the housing 12. For example, the airbag 13 is made of 235dtex, nylon 6/6 fabric, silicone coated with 31 grams/square meter.. The dtex refers to the diameter of the yarn used.. The coating allows the fabric to have approximately zero permeability.. The coating also acts as a heat insulator allowing the gas inside the airbag 13 to stay hot longer and also protects the occupant from getting burned

The airbag 13 has an opening defining a mouth that is received in the recess 16 of the housing 12 to communicate directly with the inflator 12 to receive a flow of gas therefrom. The airbag 13 also has at least one vent opening 20 of predetermined size for expelling gas from the airbag 13.

The airbag 13 is provided with a pair of internal tethers 21, each of which is secured between a front wall 22 and a back wall 23 of the airbag 13 in order to limit inflation of the airbag in a direction perpendicularly of the front wall 22. In particular, each tether 21 has an intermediate section 24 that is folded over on itself to define a plurality of layers and a burstable stitching 25 that secures the layers together. Upon inflation of the airbag 13, each tether 21 initially restrains inflation of the airbag 13 to the extent of the length of the folded over tether 21 and after bursting of the stitching 25, each tether is able to unfold and to restrain inflation of the airbag 13 to the full length of the tether 21.

A diffuser 26 is provided to secure the airbag 13 to the housing 12 in sealed relation. ln particular, the diffuser 26 is of rectangular shape to fit snugly within the recess 16 of the housing section 15 and has a pair of flanges 27 each of which is to lie against the ledge 17 of the rectangular section 15 of the housing 12. Each flange 27 has openings 28 that align with similar openings 29 in the ledge 17 of the housing section 15 to allow bolts or screws or the like to secure the diffuser 26 within the recess 16 in seal-tight manner. The flanges 27 of the diffuser 26 serve to sandwich a collar or lip 30 about the mouth of the airbag 13 between the flanges 27 and the ledge 17 of the housing 12 in sealed relation..

The collar 30 of the airbag 13 defines an opening within the airbag that communicates directly with the cylindrical section 13 of the housing 12 in order to receive a flow of gas therefrom for inflation of the airbag 16.

The diffuser 26 also has an arch-shaped central section 31 between the flanges 27 that is provided with a plurality of rectangular shaped slots or openings 32 for a controlled diffusing the flow of hot gas from the housing 12 laterally into the airbag 13.

The airbag assembly 10 cooperates with a plurality of sensors that are deployed throughout a vehicle. For example, one sensor is provided for sensing the severity of a vehicle crash and for emitting a responsive signal to an electronic control unit (ECU) 33. Additional sensors are provided for sensing the position of an occupant of the vehicle at the time of a crash, for sensing the weight of the occupant and the like.. Each sensor is connected to the ECU 33 to emit signals thereto for processing within the ECU.

Test results have indicated that for different weights of occupants and different speeds at the time of a crash, that an occupant would impact a deployed airbag at a particular time. For example, for an occupant of heavy weight and a high speed crash, a full deployment of the airbag 13 occurs earlier after the detection of the crash than for a lightweight occupant and a low speed crash.. Based on this information, the ECU is programmed with a set of characteristic signals, each of which corresponds to a given weight and a given vehicle crash severity for controlling the burn rate in the inflator 11 to inflate the airbag to an extent to initially cushion the occupant, i.e. a "soft" bag and to allow a further delivery of gas to inflate the bag.. For example, the characteristic signal is selected from a group of characteristic signals representative of a weight class selected from one of a 5 percentile weight class, a 50 percentile weight class and a 95 percentile weight class, and crash severities equivalent to a crash speed against a rigid wall selected from one of 20 km/h, 30 km/hr, 32.5 km/hr and 40 km/hr.

Thus, when the sensors deliver the signals representative of the weight class of the occupant and the speed of the vehicle at the time of a crash, the ECU processes these signals and selects one of the pre-programmed characteristic signals corresponding thereto.

The ECU 33 is also connected via a line 34 to an igniter (not shown) within the inflator 11 in order to deliver a signal to initiate combustion and the delivery of gas from the inflator 11 into the airbag 13.

The ECU 33 is also connected to an inflator control unit (ICU) 35 in order to deliver the selected characteristic signal thereto The characteristic signal selected provides a current profile that represents a specific inflation mass flow rate so that the ICU can then control the inflator 11 and specifically, a magnetic control unit within the inflator 11 so as to deliver gas at a controlled mass flow rate.

In accordance with the invention, the ICU 35 is connected to the inflator 11 via a line 36 to deliver a signal to continuously control the flow of gas therefrom in dependence on the selected current profile. The following sequence of signals is produced:
1) in response to a detection of a crash and a fire decision for the airbag system, the ECU 33 delivers a signal to the inflator 11 to initiate combustion and the delivery of gas to the airbag 13;
2) in response to the weight of the occupant and the detected severity of the crash, the ECU selects and delivers a current profile signal to the ICU 35 ; and
3) the ICU delivers a signal to the inflator 1 1 to control the inflator 11 and the mass flow rate of the gas so that at the time when the occupant is expected to impact the airbag 13, the airbag 13 will have been inflated to an extent sufficient to initially cushion the occupant and the inflator 11 will be able to deliver additional gas

Thus, the ECU 33 selectively emits a first signal to the inflator 11 to effect inflation of the airbag 13 at a first mass flow rate that is sufficient to inflate the bag to an extent sufficient to dampen an impact from an occupant at the expected time. At this time, the airbag begins to cushion or dampen the forward movement of the occupant. In parallel, the ECU 33 monitors crash severity and emits a signal to the ICU 35 to effect inflation of the airbag 13 at different mass flow rates in order to prevent the occupant from punching through the bag

The invention thus provides a "smart airbag assembly" which is tailored to the weight of the occupant and the crash severity..

The construction of the airbag assembly and, in particular the airbag 13 and the housing 12 are such as to be leak proof so that hot gas from the inflator 11 does not leak through any of the components of the assembly

In accordance with the invention, the burn rate of the liquid propellant within the inflator 12 can be controlled. For example, for a slow burn rate of the liquid propellant, one obtains a higher output of gas over time. This, in turn, affects a stronger airbag 13..

The ECU 33 can be programmed in accordance with a matrix of speeds and weights so as to effect inflation of the airbag to a point sufficient to provide a damping effect on an occupant that contacts the bag at a certain time and to thereafter provide restraint on the occupant.

The airbag assembly may also be programmed to take into account an out-of-position occupant.. For example in addition to the above described sensors, one or more additional sensors may be provided to indicate the position of an occupant at the beginning of a crash.. Based upon the location of the occupant relative to the respected position of an airbag at full inflation, the ECU 33 can be programmed in accordance with a matrix of crash severity, weights and positions whereas to affect inflation of the airbag at a faster speed or a lower speed so that the time of contact of the occupant with the airbag is tuned, i.e. varied, as the case may be.

Thus, based upon the number of occupant parameters being sensed and the matrix of parameters, the ECU 33 may be programmed with a certain number of characteristic signals representative of an appropriate current profile for controlling the inflator 11.

Further, the airbag assembly may also be programmed so that the ECU 33 can be continuously monitoring the given parameters while at the same time providing the ICU with a characteristic signal so that the ICU is actually programmed prior to a crash or an airbag deployment to control the inflator 11 in a particular manner depending on the sensing of a pre-crash scenario. The invention thus provides an airbag assembly that has a quick response time.

Further, the invention provides an airbag assembly which can be tailored to respond to different crash severities and different occupant weights in a relatively simple quick and efficient manner

Further, the invention provides an airbag that protects against an occupant becoming burned by hot gasses emitted during a crash..

## Claims

1. An airbag assembly (10) comprising a variable output inflator (11) for expelling a flow of hot gas at continuously selected mass flow rates; a housing (12) sealingly connected to said inflator (11) to receive a flow of hot gas therefrom; and an airbag (13) for receiving a flow of hot gas from said housing (12) **characterized in** having a diffuser (26) securing said airbag (13) to said housing (12) in sealed relation, said diffuser (26) having a plurality of openings (32) for diffusing the flow of hot gas from said housing (12) laterally into said airbag (13)
**characterized in**
having at least one tether (21) secured to and between a front wall (22) and a back wall (23) of said airbag (13) to limit inflation of said airbag (13) in a direction perpendicularly of said front wall (22).

2. An airbag assembly as set forth in claim 1 further **characterized in** having at least one sensor for sensing the severity of a vehicle crash and emitting a responsive signal, at least one sensor for sensing the weight of an occupant of the vehicle at the time of a crash and emitting a responsive signal, an electronic control unit (ECU) connected to each said sensor to receive and process said signals therefrom and to generate an ignition signal for delivery to said inflator to begin expelling a flow of hot gas therefrom and a characteristic signal representative of the severity of the crash and the weight of the occupant, and an inflator control unit (35) connected to and between said electronic control unit and said inflator (11) for receiving said characteristic signal and continuously controlling the flow of gas from said inflator (11) in dependence on said characteristic signal whereby said airbag is inflated to an extent sufficient to initially cushion the occupant and is thereafter further inflated to prevent the occupant from punching through said airbag.

3. An airbag assembly as set forth in any of claims 1 and 2 further **characterized in that** said airbag (13) has at least one vent opening (20) of predetermined size for expelling gas therefrom.

4. An air bag assembly as set forth in any of claim 2 further **characterized in that** said characteristic signal is selected from a group of characteristic signals representative of a weight class selected from one of a 5 percentile weight class, a 50 percentile weight class and a 95 percentile weight class, and crash severities equivalent to a crash speed against a rigid wall selected from one of 20 km/h, 30 km/hr, 32.5 km/hr and 40 km/hr.

5. An air bag assembly as set forth in claim 1 further **characterized in that** said tether (21) has an intermediate section (24) folded over on itself to define a plurality of layers and a burstable stitching (25) securing said layers together whereby upon inflation of said airbag (13) said tether (21) initially restrains inflation of said airbag (13) to the extent of the length of said folded over tether (21) and after bursting of said burstable stitching (25), said tether (21) restrains inflation of said airbag (13) to the full length of said tether (21).

6. An airbag assembly as set forth in any of claims 1 to 5 further **characterized in that** said airbag (13) is made of 235dtex, nylon 6/6 fabric, silicone coated with 31 grams/square meter.

7. A process of inflating an airbag according to claim 1 in a vehicle **characterized in** having the steps of providing an electronic control unit (ECU) programmed with a plurality of characteristic signals, each said characteristic signal being representative of a weight class selected from one of a plurality of weight classes and a crash severity equivalent to a crash speed against a rigid wall selected from one of a plurality of predetermined speeds; sensing the severity of a vehicle crash and emitting a responsive signal to the electronic control unit (ECU); sensing the weight of an occupant of the vehicle at the time of a crash and emitting a responsive signal to the electronic control unit (ECU); processing said responsive signals in the electronic control unit (ECU) to generate an ignition signal for delivery to an airbag inflator (11) to begin expelling a flow of hot gas therefrom into an airbag (13) and to simultaneously select and deliver a characteristic signal from said plurality of characteristic signals representative of said responsive signals to an inflator control unit (ICU); and continuously controlling the flow of gas from the inflator (11) in dependence on said delivered characteristic signal to the inflator control unit (ICU) whereby the airbag (13) is inflated to an extent sufficient to initially cushion the occupant and is thereafter further inflated to prevent the occupant from punching through the airbag.

8. A process as set forth in claim 7 further **characterized in that** said weight class is selected from one of a 5 percentile weight class, a 50 percentile weight class and a 95 percentile weight class.

9. A process as set forth in claim 8 further **characterized in that** said speed is selected from one of 20 km/h, 30 km/hr, 32.5 km/hr and 40 km/hr.

## Patentansprüche

1. Airbaganordnung (10) mit einem Gasgenerator (11) mit variabler Ausgabeleistung zum Ausstoßen eines Heißgasstroms mit kontinuierlich gewählten Massenströmen; einem dicht mit dem Gasgenerator (11) verbundenen Gehäuse (12) zum Aufnehmen eines Heißgasstroms aus diesem; und einem Airbag (13) zum Aufnehmen eines Heißgasstroms aus dem Gehäuse (12), wobei ein Diffusor (26) vorgesehen ist, welcher den Airbag (13) in dichtem Verhältnis an dem Gehäuse (12) befestigt, wobei der Diffusor (26) mehrere Öffnungen (32) aufweist, um den aus dem Gehäuse (12) kommenden Heißgasstrom seitlich in den Airbag (13) zu leiten,
**dadurch gekennzeichnet, dass**
mindestens ein Halteband (21), das an und zwischen der Vorderwand (22) und der Rückwand (23) des Airbags (13) angebracht ist, um das Aufblasen des Airbags (13) in einer zum Vorderwand (22) senkrechten Richtung zu begrenzen.

2. Airbaganordnung nach Anspruch 1, ferner **dadurch gekennzeichnet, dass** sie aufweist: mindestens einen Sensor zum Erfassen der Schwere eines Fahrzeugzusammenstoßes und zum Ausgeben eines Antwortsignals, mindestens einen Sensor zum Erfassen des Gewichts eines Fahrzeuginsassen zum Zeitpunkt des Zusammenstoßes und zum Ausgeben eines Antwortsignals, eine elektronische Steuereinheit (ECU), welche mit jedem der Sensoren verbunden ist, um die von diesen kommenden Signale zu empfangen und zu verarbeiten und ein Zündsignal zum Ausgeben an den Gasgenerator zu erzeugen, um das Ausstoßen eines Heißgasstroms aus diesem zu beginnen, und ein charakteristisches Signal zu erzeugen, das die Schwere des Zusammenstoßes und das Gewicht des Insassen wiedergibt, und eine Gasgeneratorsteuereinheit (35), die mit und zwischen der elektronischen Steuereinheit und dem Gasgenerator (11) verbunden ist, um das charakteristische Signal zu empfangen und den Gasstrom aus dem Gasgenerator (11) kontinuierlich in Abhängigkeit von dem charakteristischen Signal zu steuern, wodurch der Airbag in ausreichendem Maß aufgeblasen wird, um den Insassen anfänglich abzufangen, und anschließend weiter aufgeblasen wird, um zu verhindern, dass der Insasse den Airbag durchdrückt.

3. Airbaganordnung nach einem der Ansprüche 1 und 2, ferner **dadurch gekennzeichnet, dass** der Airbag (13) mindestens eine Lüftungsöffnung (20) von vorbestimmter Größe aufweist, um Gas aus dieser auszustoßen.

4. Airbaganordnung nach Anspruch 2, ferner **dadurch gekennzeichnet, dass** das charakteristische Signal aus einer Gruppe von charakteristischen Signalen gewählt ist, welche eine Gewichtsklasse, die aus einer Gewichtsklasse mit einem Perzentilwert 5, einer Gewichtsklasse mit einem Perzentilwert 50 und einer Gewichtsklasse mit einem Perzentilwert 95 gewählt ist, und Schweregrade des Zusammenstoßes angeben, die einer Aufprallgeschwindigkeit auf eine starre Wand angeben, welche unter Geschwindigkeiten von 20 km/h, 30 km/h, 32,5 km/h und 40 km/h gewählt ist.

5. Airbaganordnung nach Anspruch 1, ferner **dadurch gekennzeichnet, dass** das Halteband (21) einen Mittelabschnitt (24), der auf sich selbst gefaltet ist, um mehrere Lagen zu bilden, und eine zerreißbare Naht (25) aufweist, welche die Lagen fest miteinander verbindet, wodurch beim Aufblasen des Airbags (13) das Halteband (21) anfangs das Aufblasen des Airbags (13) auf das Maß der Länge des gefalteten Haltebandes (21) begrenzt. und das Halteband (21) nach dem Reißen der zerreißbaren Naht (25) das Aufblasen des Airbags (13) auf die volle Länge des Haltebandes (21) begrenzt.

6. Airbaganordnung nach einem der Ansprüche 1 bis 5, ferner **dadurch gekennzeichnet, dass** der Airbag (13) aus einem Nylon 6/6 Gewebe mit 235 dtex besteht, das mit 31 Gramm/m² Silikon beschichtet ist.

7. Verfahren zum Aufblasen eines Airbags nach Anspruch 1 in einem Fahrzeug, **gekennzeichnet durch** die folgenden Schritte: Vorsehen einer elektronischen Steuereinheit (ECU), die mit mehreren charakteristischen Signalen programmiert ist, wobei jedes charakteristische Signal eine unter mehreren Gewichtsklassen ausgewählte Gewichtsklasse und einen Schweregrad eines Zusammenstoßes angibt, der einer Aufprallgeschwindigkeit auf eine starre Wand entspricht, die unter mehreren vorbestimmten Geschwindigkeiten gewählt ist; Erfassen der Schwere eines Fahrzeugzusammenstoßes und Ausgabe eines Antwortsignals an die elektronische Steuereinheit (ECU); Erfassen des Gewichts eines Insassen des Fahrzeugs zum Zeitpunkt eines Zusammenstoßes und Ausgeben eines Antwortsignals and die elektronische Steuereinheit (ECU); Verarbeiten der Antwortsignale in der elektronischen Steuereinheit (ECU), um ein Zündsignal zur Ausgabe an einen Airbag-Gasgenerator (11) zu erzeugen, um das Ausstoßen eines Heißgasstroms aus diesem in einen Airbag (13) zu beginnen und gleichzeitig ein charakteristisches Signal unter den mehreren charakteristischen Signalen, welche die Antwortsignale darstellen, zu wählen und an eine Gasgeneratorsteuereinheit (ICU) auszugeben; und kontinuierliches Steuern des aus dem Gasgenerator (11) kommenden Gasstroms in Abhängigkeit von dem an die Gasgeneratorsteuereinheit (ICU) gelieferten charakteristischen Signal, wodurch der Airbag (13) in einem Maß aufgeblasen wird, das ausreicht, den Insassen anfänglich abzufangen, und der Airbag anschließend weiter aufgeblasen wird um zu verhindern, dass der Insasse den Airbag durchdrückt.

8. Verfahren nach Anspruch 7, ferner **dadurch gekennzeichnet, dass** die Gewichtsklasse unter einer Gewichtsklasse mit einem Perzentilwert 5, einer Gewichtsklasse mit einem Perzentilwert 50 und einer Gewichtsklasse mit einem Perzentilwert 95 gewählt ist.

9. Verfahren nach Anspruch 8, ferner **dadurch gekennzeichnet, dass** die Geschwindigkeit unter Geschwindigkeiten von 20 km/h, 30 km/h, 32,5 km/h und 40 km/h gewählt ist.

## Revendications

1. Ensemble de coussin gonflable de sécurité (10) comprenant un gonfleur (11) à débit réglable pour expulser un courant de gaz chaud à des taux de débit-masse continûment sélectés; un boîtier (12) étanchement raccordé au gonfleur (11) pour recevoir un courant de gaz chaud venant dudit gonfleur; et un coussin gonflable de sécurité (13) pour recevoir un courant de gaz chaud venant dudit boîtier (12), l'ensemble comprenant un diffuseur (26) étanchement fixant ledit coussin gonflable de sécurité (13) audit boîtier (12), ledit diffuseur (26) comprenant plusieurs ouvertures (32) pour diffuser le courant de gaz chaud venant dudit boîtier (12) latéralement dans ledit coussin gonflable de sécurité (13),
**caractérisé en ce que**
l'ensemble comprend au moins une bande de retenue (21) attachée à et entre une paroi avant (22) et une paroi arrière (23) dudit coussin gonflable de sécurité (13) pour limiter le gonflement dudit coussin gonflable de sécurité (13) dans une direction perpendiculaire à ladite paroi avant (22).

2. Ensemble de coussin gonflable de sécurité selon la revendication 1, **caractérisé en ce qu'**il comprend au moins un capteur pour détecter la sévérité d'une collision d'un véhicule et pour émettre un signal de réponse, au moins un capteur pour détecter le poids d'un passager du voiture au moment d'une collision et pour émettre un signal de réponse, une unité de commande électronique (ECU) connectée à chaque capteur pour recevoir et traiter les signaux desdits capteurs et pour générer un signal de déclenchement à transmettre audit gonfleur pour commencer l'expulsion d'un courant de gaz chaud dudit gonfleur et pour générer un signal caractéristique indiquant la sévérité de la collision et le poids du passager, et une circuit de commande du gonfleur (35) connectée à et entre ladite unité de commande électronique et ledit gonfleur (11) pour recevoir ledit signal caractéristique et pour commandant en continu le courant de gaz venant du gonfleur (11), en fonction du signal caractéristique, le coussin gonflable de sécurité étant gonflé à un degré suffisant pour initialement amortir un passager et étant gonflé de plus après pour empêcher le passager de comprimer le coussin gonflable de sécurité.

3. Ensemble de coussin gonflable de sécurité selon les revendications 1 et 2, en outre **caractérisé en ce que** ledit coussin gonflable de sécurité (13) présente au moins une ouverture de ventilation (20) d'une dimension prédéterminée pour l'expulsion de gaz dudit coussin.

4. Ensemble de coussin gonflable selon la revendication 2, en outre **caractérisé en ce que** le signal caractéristique est choisi dans la groupe de signaux caractéristiques indiquant une classe de poids choisie parmi une classe de poids de 5 pourcentiles, une classe de poids de 50 pourcentiles et une classe de poids de 95 pourcentiles, et des sévérités de collision équivalentes à une vitesse de collision avec une mur rigide choisie parmi 20 km/h, 30 km/h, 32,5 km/h et 40 km/h.

5. Ensemble de coussin gonflable de sécurité selon la revendication 1, en outre **caractérisé en ce que** ladite bande de retenue (21) comprend une zone intermédiaire (24) pliée sur elle-même pour former plusieurs couches, et une couture déchirable (25) maintenant les couches ensemble, par où, quand le coussin gonflable de sécurité (13) est gonflé, ladite bande de retenue (21) initialement limite le gonflement dudit coussin gonflable de sécurité (13) à la longueur de la bande de retenue (21) pliée, et après la couture déchirable (25) est déchirée, ladite bande de retenue (21) limite le gonflement dudit coussin gonflable de sécurité (13) à toute la longueur de ladite bande de retenue (21).

6. Ensemble de coussin gonflable de sécurité selon l'une quelconque des revendications 1 à 5, **caractérisé en ce que** ledit coussin gonflable de sécurité (13) est formé d'un tissu de nylon 6/6 à 235 dtex, revêtu de 31 grammes de silicone par mètre carré.

7. Procédé de gonflement d'un coussin gonflable de sécurité selon la revendication 1 dans un véhicule, **caractérisé par** les étapes suivantes: prévoir une unité de commande électronique (ECU) programmée avec plusieurs signaux caractéristiques, chaque signal caractéristique indiquant une classe de poids choisie de plusieurs classes de poids et une sévérité de collision équivalente à une vitesse de collision avec une mur rigide, choisie parmi plusieurs vitesses prédéterminées; détecter la sévérité d'une collision d'un véhicule et émettre un signal de réponse à l'unité de commande électronique (ECU); détecter le poids d'un passager du véhicule au moment de la collision et émettre un signal de réponse à l'unité de commande électronique (ECU); traiter les signaux de réponse dans l'unité de commande électronique (ECU) pour générer un signal de déclenchement à transmettre à un gonfleur (11) du coussin gonflable de sécurité pour initier l'expulsion d'un courant de gaz chaud dudit gonfleur dans le coussin gonflable de sécurité (13) et pour choisir et transmettre, à la même temps, un signal caractéristique des plusieurs signaux caractéristiques indiquant les signaux de réponse à une unité de commande de gonfleur (ICU); et commander en continu le courant de gaz venant du gonfleur (11) en fonction du signal caractéristique transmis à l'unité de commande de gonfleur (ICU), par où le coussin gonflable de sécurité (13) est gonflé à un degré suffisant pour initialement amortir un passager et est gonflé de plus après pour empêcher le passager de comprimer le coussin gonflable de sécurité.

8. Procédé selon la revendication 7, en outre **caractérisé en ce que** la classe de poids est choisie parmi une classe de poids de 5 pourcentiles, une classe de poids de 50 pourcentiles et une classe de poids de 95 pourcentiles.

9. Procédé selon la revendication 8, en outre **caractérisé en ce que** la vitesse est choisie parmi 20 km/h, 30 km/h, 32,5 km/h et 40 km/h.
